# EUROPEAN PATENT APPLICATION

(11) **EP 2 120 179 A1**
(43) Date of publication of application: **18.11.2009**
(21) Application number: 08156412.2
(22) Date of filing: 16.05.2008
(51) Int. Cl.: G06F 21/24, G06F 17/30

(54) **Method for modelling a user**

(71) Applicant: Swisscom AG, 3050 Bern (CH)
(72) Inventor: Van Kommer, Robert, 1752 Villars-sur-Glane (CH)
(74) Representative: P&TS Patents & Technology Surveys SA

(57) **Abstract**

A method for modelling a user, comprising:
-locally establishing more than one model (30, 31, 32) of the user, each model corresponding to one persona of this user,
-granting different access rights (300, 301, 302) to said models,
-remotely transmitting at least one of said models.

## Description

### Field of the invention

The present invention concerns a method for establishing and using models of users. The present invention relates in particular to various methods and devices for establishing and managing users' models, especially computers' and phones' users, and for adapting services provided to those users' depending on the models.

### Description of related art

Several methods are known in the prior art for computing user's models and for using those models in order to personalize various applications or services. A very effective method to customize a service or application is to adapt it based on the unique interests of each user, culled from information about his past behaviour. The recommendation systems used by companies such as Amazon or TiVo, among others, typically use such a method. Using information on past purchases, previous choices, or movie ratings, these systems steer consumers to user-specific pages with recommended products or services.

EP1524611 describes a method for generating a user profile. The profile is established with explicitly entered text and/or implicitly when the user uses a document or content. This profile may be used for example for personalising a search engine.

US7162494 describes a computer implemented method for collecting and managing user profile in the Internet. It uses agents stored in a decentralized way and interconnected to a hub. The agents (software stored on user devices or on the network) allow collecting data, mining observational data in a context-sensitive manner, in order to create, extend or update user profiles. They negotiate with any application that requests profile data.

US2002133500 describes a user profile that can be accessed by merchants. Users control what information is grouped into a profile. A single user may have several profiles.

W02007115863 describes an arrangement permitting the customization of a computer depending on pre-defined profiles. The profile may be downloaded from the Internet and includes user's settings for different applications, such as cookies, favourites, word templates, etc.

US2006282303 is related to a method for defining interaction patterns between client profiles among an organization. Client profiles are created from communication data (emails, messages, local documents, newsgroup and weblog data) by an analytic module that enables a selection of the data used for the profile creation. The server aggregates the profiles to identify interaction patterns and keywords that are popular in the organization. The server then analyzes the interaction patterns and popular keywords to determine relationship trends between users and groups in the organization, and emerging topics that are important to the organization.

W0200755857 describes a system for enabling multiple service profiles on a single telecommunication device. Profiles are automatically generated in the user's equipment.

EP1645999 is related to a messaging system in which user profile information is embedded into a message as metadata (hidden field by default) including characteristics about the sender of the electronic message (e.g. name, addresses, phone number, alias, preferences, hobbies...).

EP1326189 describes a system to prioritize messages (emails, voice mails, ..) employing classifiers and a personalisable profile based on behaviour acquisition.

FR2828362 discloses an interface and management system of user profiles based on personal data and on the communications the user sets up with the network. The user may have several avatars associated with different profiles, and select one of the profiles when connecting to a web site or remote service.

US2002082901 describes a method comprising observation of user behaviour in different domains, such as online or conventional purchases, viewing of web pages, viewing of television programs, movie ticket purchases, pay-per-view orders, and many others.

US6895406 relates to a dynamic personalization method of user profiles for searching a database. A list of keywords used for the search is updated while visiting websites or portals on the Internet.

EP1638047 relates to the creation of user interests profiles by monitoring the interaction between a user and programs executing on the client computer. The system is used for social network analysis or interest analysis in order to exchange profile.

W09913414 discloses a user's profile based on users' interactions with documents. The user can explicitly indicate the user's level of interest in a part of the document; other interactions or parameters, such as the reading speed, duration of display of each text portion, etc. can be processed. The user profile may consist of weighted sets of keywords that indicate the level of interest of the user in various content areas. The users' profiles may be used for finding similar documents, for selecting targeted advertisements, etc.

W00043915 describes a method for automatically generating a personalized user's profile based on linguistic patterns of documents provided by the user.

US2002107853 describes a personalized tool for automated generation of user-specific recommendations. The system detects one or more statistical models based on available data. The user's data is either gathered explicitly through questionnaires etc. or can be implied through user's behavioural observation (session logs etc).

W005033979 describes a system and a method for creating a user's profile and using the user's profile to order search results returned by a search engine and thus provide a personalized web search. The user's profile is extracted from various information sources, including previous search queries, links from or to the documents identified by the previous queries, sampled content from those documents as well as personal information implicitly or explicitly provided by the user.

WO05098611 relates to a personalized ranking method of search results depending on manually entered user profiles.

EP0718784 describes a computer-implemented method for retrieving information based on a user-defined profile. This user profile is determined by data scanned from predefined sources of information that the user can select.

### Brief summary of the invention

One issue with several of the above mentioned methods is the socalled "cold start" problem. This problem stems from the difficulty of making any recommendation to previously unknown users. For example, a new user of a web shop like Amazon can only get standard, user-independent suggestions, for example a hit-parade or a list of best sold books. It is only after several visits and purchases that the web site owner will know the interests of the user better and be in a position to make more personalized suggestions. This process of establishing a profile has to be repeated for each web site or service the user wants to use.

In addition, those profiles are often established in a remote server. Many users feel uncomfortable with such a profile that may contain detailed information about the user's habits and purchases.

Even if the user profile is established locally in the user's equipment, many users would be reluctant to make it accessible to remote web sites or third parties if they cannot control what this third party can do with the profile. For example, a user may accept to share with one web site a list of recently purchased books, but does not want this list to be communicated to third parties.

There is therefore a need for a new method for establishing users' profiles that solve at least some of those and other problems of the

### prior art.

According to the invention, these aims are achieved among other by means of a method for modelling a user, comprising:
- locally establishing more than one model of the user, each model corresponding to one persona of this user,
- granting different access rights to said models.

The models may then be transmitted remotely.

In this application, "local" or locally" refers to the user; establishing a model locally means that the model is computed at least in part in a user's equipment, or in the user's local network, or using applications belonging to or controlled by the user (even if those applications are executed in a remote device). "Remote", or "remotely", on the other side, refers to an action or event happening in a device or application or equipment not owned or controlled by the user, for example a remote web server or remote equipment owned by a third party.

Establishing the user's model locally, for example in his own device, allows the user to better control who can access this profile. Granting access rights to the model allows the user to control more precisely who can access this model, or under which circumstances the model can be accessed. The possibility to build several models for several personae of a single user also allows a user to reveal some aspects of his personality or consuming habits in one specific model, and hide those aspects in other models.

Moreover, the possibility to transmit those models to external devices allows one user to decide which external device (for example a remote server) can use a specific model. A single model can thus be used by different services, including new services or applications, thus resolving the above mentioned cold start problem.

### Brief Description of the Drawings

The invention will be better understood with the aid of the description of an embodiment given by way of example and illustrated by the figures, in which:
Fig. 1 is a block diagram schematically illustrating a system according to the invention.
Fig. 2 schematically illustrates the hierarchical organization of the different personae of a single user.
Fig. 3 illustrates a possible screen copy of an application based on the method of the invention.

### Detailed Description of possible embodiments of the Invention

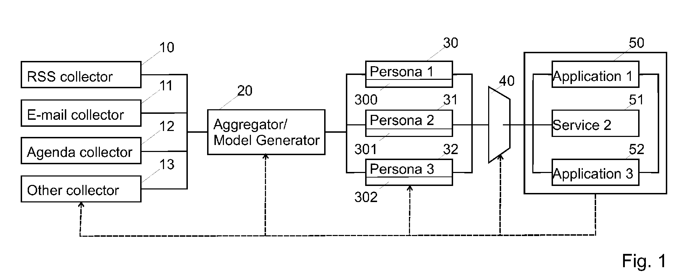

Fig. 1 illustrates a system comprising one or several event collectors 10-13 for collecting events in a data processing system of a user, such as a personal computer, personal digital assistant, personal music player or mobile phone for example. In the illustrated example, a first collector 10 collects events from one or several RSS feeds. A second collector 11 collects e-mails received by or sent to the user. A third collector 12 collects dates, tasks and appointments from an agenda. Other collectors 13 may be provided from collecting events from other sources, including but not restricted to visited web pages, documents processed or read with a text processing system, spoken text recorded with a microphone, media items (including songs, videos, books, etc) consumed (purchased, played, recommended, etc), etc. Some collectors may also collect events in the form of explicit answer to questions, for example through a form that the user needs to fill in order to complete his model. Depending on the collector and on the source, an event may include a new from a RSS feed, an individual e-mail, an agenda entry, or any other piece of information presented or input by the user. An event may thus correspond to a user interaction with a document, such as a text, image, audio, HTML, XML and/or video document. The user interaction that triggers an event may for example include actions such as selecting a document (for example by clicking on it, purchasing it, playing it, consuming, receiving it, sending it, storing it, noting it, and/or otherwise manifesting his interest or disinterest for the associated document).

Events are preferably stored with the model, preferably in a compressed form, and partially labelled, for example associated with a date and possibly with other metadata, including for example a location, sender, recipient, qualitative or emotional attributes, etc.

Events from the various event collectors 10-13 are processed by an aggregator (or model generator) 20 that generates one or several user models based on those event. In a preferred embodiment, the model generator 20 is based on a transductive support vector machine (TSVM) for classifying the stream of events. The classification is thus automatic, i.e., not supervised, or only partly supervised when the user decides to do so, for example when a wrong classification of event has been detected and corrected. Other classification engines, for example clustering algorithms or other machine learning technologies, may be used.

In order to collect many different events from various event sources, the aggregator 20 is advantageously run locally, preferably integrated in the operating system of the user's device, and available to all applications and services that can send events to the aggregator 20 and/or use the different personae models generated, provided they have the required access rights. In another embodiment, the aggregator is built as a separate application and uses agents and/or plug-ins in order to access events generated by some applications.

The main aim of each model generated by the generator 20 is to classify future or unknown events, for example in order to predict if this event is likely to interest the user or one particular persona of the user. The classification is preferably automatic, based on previously received events (the "working set") and possibly on a training set. This process is called online learning; the system improves automatically its knowledge of the persona each time an event is received, and automatically builds cluster of documents or events sharing common features.

Alternatively, or in addition, the system may use active learning methods, where the user indicates, either explicitly or implicitly, his level of interest for at least some events or documents. In one embodiment, only a part of the received events are classified or labelled by the user, in order to improve the tuning of the transductive support vector machine. Explicit indication of the user's interest may be based for example on notes, evaluations, labels or indication of emotions voluntarily entered by the user for indicating his interest for a particular event. Implicit indication of a level of interest may be based on the behaviour of the user. Depending on the event and/or application, the level of interest may for example be modified when the user sends an answer to an e-mail, or classify the e-mail, or purchase and/or consume in any way a product or media item, etc. It is also possible within the frame of the invention to monitor the time spent by the user for watching or consuming each event (for example the time spent over a web page) in order to implicitly determine his level of interest.

In an embodiment, the models are based not only of events, but also on documents not always related to an event. Models may for example be built and/or trained or improved from an existing set of documents, for example on all the documents of certain types available to a user, for example a collection of text documents, multimedia files and/or agenda entries, and/or all documents, or all documents of a certain type, to which the user or persona has access rights. The persona's model may store information or features directly derived or otherwise computed from all documents, including for example keywords, metadata or other properties. The model of a persona is thus more than just a user's or persona's profile; it may include, in a compressed form, a list of events related with this person, and/or a list of all documents, or information on all documents, accessed or accessible by the user or persona.

The model generator 20 generates one or several models of the user. Each model corresponds to one among several personae of the user. In this context, a persona is a character or a self-construed representation of a person. One user may have several personae (e.g. Dr. Jekyll and Mr. Hyde; user@work and user@home), each persona corresponding to one facet of the user, or to one set of interests of the user in a particular situation. In the example of Fig. 1, the user has three personae 30, 31, 32. Each model for each persona is associated with specific access rights 300, 3001, 302, as will be described below.

In a preferred embodiment, the models are generated and stored locally, for example in the user's device or in a user controlled or owned storage, in order to maintain the privacy of this model. Each model may be stored as a single data file or a set of datafiles, and may thus be transmitted remotely, for example to external devices, including for example as e-mail attachment, if the user decides to do so. Generating and/storing the models at least partly in a remote location, for example in a remote server in a LAN or even in a remote server in the Internet, is however also possible. Independently of the storage location, it is advantageous if the models belong to their user who is also sole responsible for distributing them and controlling the access rights of each model.

The model generator 20 determines to which persona among the several user's personae each event received from any collector 10 to 13 should be associated. This determination is preferably automatic, based on the event itself. For example, if a user has defined two personae, one corresponding to his interests at work (or during public activities) and another more private, the model generator 20 first determines if a new event to classify is related to work or other or not; this evaluation may be based on the model for work itself, i.e., on the proximity between the new event and events previously used for tuning the model "work".

Alternatively, or in addition, the persona(e) associated with a new event may be determined based the context, for example based on time, location, currently used device and application, and/or a user's login. The model generator 20 may for example determine that the user is at work based on his location, time of the day and/or credentials used for connecting to his network or to the application managing the models. Alternatively, or in addition, the model generator may require the user to explicitly indicate the persona(e) which should be impacted by a new event - for example when an automatic classification is not possible and when the confidence level for this classification is below a predetermined threshold.

Each persona 30-32 is thus associated with one model describing the interests and behaviour of this persona. Those different models may be used by different applications or services 50-52. Again, a selector 40 determines which model (i.e., which persona) should be used at any moment by each application, either automatically based on time, location, credentials used at log in, user's device, currently used application, etc, and/or manually based on user's selection.

The models 30-32 may be used for example for personalising the applications or services 50-52 run locally, for example in the user's device. In a typical application, the models are used for filtering, classifying or ranking datasets with model dependant criteria. The models may also be used by applications or services run remotely, outside of the user's device, for example by a web site run on an external device such as a web server. In this case, the models may be transmitted to the external device, or used for post-processing results received from those external devices.

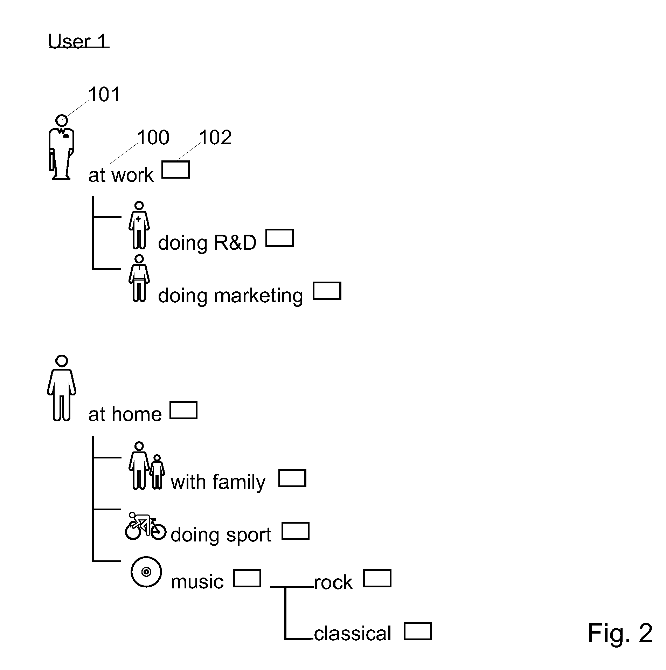

Fig. 2 illustrates a possible structure of different personae created by one user (user 1). In this example, the user 1 has a hierarchical structure of personae, with a first set of personae corresponding to his interests at work and a second set of personae corresponding to more private interests. At work, the user has two personae corresponding to research and development activities and to marketing activities respectively; both are specific embodiments of the more general persona "at work". At home, this user has three personae corresponding to his various interests when playing with family, doing sport or listening to music; this last persona has two sub-personae corresponding to different interests for rock and classical music.

The structure of personae of a single user may thus be hierarchical. In this case, each persona at an upper level (for example music) correspond to a merge of the personae at depending lower levels /rock and classical), plus additional information that can not be classified at a lower level. This means for example that any event of this user related to rock music will impact the personae "rock", "music" and "at home", while an event related to jazz will only affect the personae "music" and "at home".

This hierarchical structure of personae may be displayed on the user's device display; each persona has preferably a user-set name 100 (for example "at work") and preferably an icon or image 101. Inactive personae that have not been used for a predetermined time may be marked, faded or erased from the list. Those personae names and icons may also be presented to the user when managing or selecting a persona. A selection zone close to each persona allows the user to manage each persona, for example in order to change its name or icon, or to modify the associated access rights, over a non displayed management page.

This hierarchy of personae may be created by the user, preferably over a graphical interface (not shown) allowing the user to create, edit and remove personae. In an embodiment, new personae may also be created and/or edited automatically, on-the-fly, for example by the model generator 20 when new events are received. The model generator may for example create a new persona when a specific interest has been derived from one document or set of documents associated with one or several events. New personae may for example be suggested based on templates for common personae of different users; the model generator 20 can then detect that the user has an interest matching an existing template, and propose a new persona corresponding to this template. The template will be user and persona-dependant adapted with new events received by the user.

Models and personae can preferably be merged, for example when a user has two close personae that he wants to combine. The merging may be permanent and destroy the originating merged profiles, or create a new model and persona without removing the merged personae. In this later case, the merged persona may be sub-persona at a dependant hierarchical level of the main, newly created persona.

It is also possible to merge personae of several users and create a merged persona for modelling the interests of the group. One may for example create a merged model for a family, workgroup or company or even for a larger population without any limit as to the number of merged profiles and personae. The merged model is then a model based on or trained with all the events received by all the merged personae.

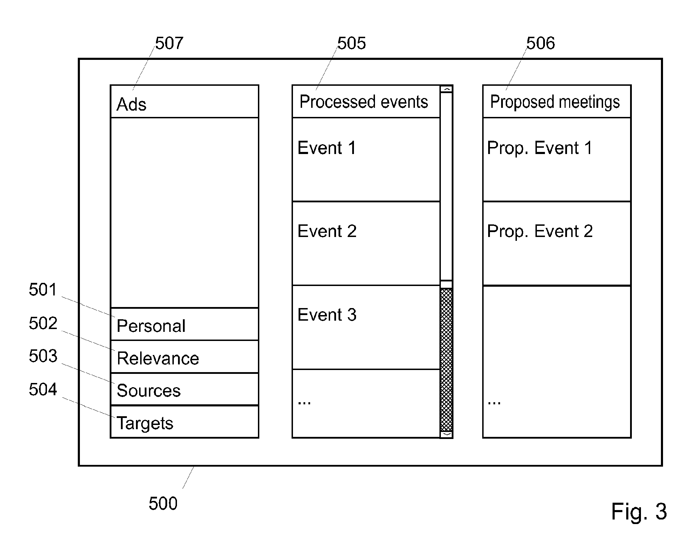

Figure 3 illustrates an example of a page 500 presented by an application 50 that may use the method of the invention. In this example, the application is locally run, for example in the user's device, and processes events 505, such as agenda entries, from one or several sources. A selection zone 501 allows the user to select the persona he currently wants to use, and/or the persona he wants to associate with an incoming event, and/or the persona he wants to use for filtering recommended events or meetings. If the user does not indicate any preference, the application may select automatically the persona to use for each of those purposes, based for example on the context and/or on each event.

The section 505 contains a list of incoming events to process or which have been processed. The system classifies each event, i.e., determines its pertinence for each persona - or for the currently selected persona - based on user's behaviour and on previously classified events. The user may also indicate in a zone 502 if the event is relevant for a particular persona, and possibly indicate a score and/or an emotion for this event. This process is called labelling an event, and is optional.

The section 503 allows the user to select among several sources of events he currently wants to consider. As already mentioned, sources may include various agenda applications or web sites, e-mail clients, other applications, etc.

The section 504 allows the user to select the target applications that make use of the currently selected models or the currently selected streams of events.

The section 505 presents a computer-retrieved list of events meeting that may interest the user, or the currently selected persona or personae of this user. This list may for example contain a list of meetings or manifestation in which the user may decide to participate, based on previous entries in his agenda. This list is determined with the above mentioned transductive support vector machine, by classifying each proposed event as interesting or not interesting (or any possible intermediate value) based on the proximity between the proposed event to classify and the previously processed events, i.e., the training and working set retrieved from agenda entries.

The application may also comprise a section 507 with personae-dependant advertisings, filtered and/or classified from a larger set of advertising using the model of the persona and the same TSVM.

As already mentioned, the different models of the different personae of a user are preferably stored as single document, possibly in a text or .XML format, or as a software object. The model may be encrypted in order to prevent unauthorised access, and associated with access rights defined by the user who owns the models. The access rights set by the user may for example define which user, application or service has a right to read or edit which part of which model. A user may for example have one or several public models that he can send to any website or third party that can use it, and one or several more private models containing confidential information that he want to keep private or share only with a limited number of users, or groups of users.

In an embodiment, at least one of the models employs digital right management (DRM) for preventing other users to use those models in a way not accepted by the owner. The owner of the model may for example define that a specific model can be used only once, or a limited number of time, or only during a predefined period, or only by some machine, some user or some application or service. A user may for example authorize a specific remote device or application, for example a web server, to access the model of one of these personae only once, and only during a predefined time window, and for one specific purpose. The DRM prevents the remote device or user from storing this model or reusing it in any unauthorized way for a different purpose.

A single model may comprise different portions, including for example a protected private portion and a public portion available to third party. Different access rights may thus be associated with different portions of a single model. In one embodiment, the private portion of a model comprises a better trained copy of the corresponding public portion, i.e., a model that has been trained with additional events.

As already mentioned, one model is based on previously stored events. In one embodiment, the model may depend on a time associated with the event and/or with a number of times the persona has been exposed to this event. The idea is to mimic a cognitive process and to weight differently the events used for the generation of the model, based on their time and number of occurrences. In one embodiment, an old event has (at least usually) a lower weight than a more recent event, and its impact in the model will even be completely removed after some time. The weight of each event in the model may decrease progressively, for example according to an exponential or Poisson law imitating the human memory. An event which is repeated a number of times, or similar events repeated in a short period, will have a larger impact than an individual event. For example, if the event is a song that has been played once, this song will be soon forgotten, in its impact in a model of the user's music taste will decrease rather quickly. If however the same song, or a similar song, is played again before it has been completely forgotten, its impact in the model will be larger than just after the first play - the interest is reactivated. Songs which have been repeated a very large number of times will possibly never be forgotten.

In one embodiment, the forgetting function associated with each event in the model depends on the type of event, and/or on other metadata associated with the event. This reflects the fact that human memory usually tends to forget dates and numbers faster than words, concepts or music for example. The forgetting function may also depend on the support of the initial event - many users forget the content of a web page faster than the content of a more personal e-mail, and e-mails faster than regular post mail.

As already mentioned, the models associated with one persona may be transmitted remotely, for example to other users or devices. This transmission may be automatic; a remote web server may for example automatically and transparently access one specific model if the owner of this model has authorized this server to do so. A confirmation of the user may be requested.

The transmission may also be initiated by the user, who can for example attach a model to an outgoing e-mail or upload it to a remote web site in order to get a more personalized service. The user may also decide to send one or several models to his families or friends, or even to anonymous third parties, if he wants those recipients to know him better. A user may for example decide to publish the models of some of his different personae on his own web page or blog, and thus allow third parties to provide him better personalized services. A model may also be transmitted during a voice communication, for example over a parallel data channel, in order to communicate his interests to the other party. A typical application may be a call to a travel agency, where one user decide to send the model of his persona "during holidays" to the travel agent in order to get better recommendations.

A typical application of the method concerns the persona-dependant filtering or post-filtering of information presented to a user. Fig. 3 illustrates an example of a system that proposes different events and advertisings that may interest a user, selected using the currently active personae's models. The advertising may be based on the model computed from the event - in order to derive the user's interests - and/or from the content or subject of the events themselves, or of the associated events, if this content or abject has been stored. For example, there is no point in presenting an advertising to a persona for a book, if the event's history associated with this persona contains an event revealing that the user has already purchased this book.

Those models may also be used for other applications where a user or persona dependant selection or ranking of information is required. In an embodiment, a pre-filtering is carried out using conventional methods, for example a user-independent pre-filtering, in order to reduce the number of documents presented to the user. This pre-filtering may be performed locally, for example in the user's device, and/or in a remote device, before transmission to the user. The models of the invention based for example on transductive support vector machine are then used in a post-filtering step for further restricting the number of items presented to the user, taking into account the model(s) of the currently active persona(e).

This system may be used for example by a search engine, where a first selection of items or URLs likely to interest the user is carried out locally or in a remote server, and a persona-dependant post-filtering of those results is carried out locally (or in the remote server) in order to retrieve the URLs and items that match the currently selected persona or personae. This model may also be used in order to improve the ranking of the search results.

Another application relates to a news aggregator for automatically and dynamically generating pages or other collections of news likely to interest one user or one persona of this user. Again, the selection may be based on a pre-filtering based on conventional technologies, and persona-dependant post-filtering among the pre-filtered news.

In a similar way, the method may be used by any system for pushing information to the users. In one embodiment, a locally run application based on the invention post-filters and sort information provided by a conventional remotely run alert system.

More generally, the method may be used for establishing a persona-dependant hit-parade of events or documents of any kinds. This hit-parade may be presented to the user on a display, or spoken using text-to-speech technology. Action carried out by the user on this hit parade - for example selection of any presented document or event - may in turn generate a new event that will impact the underlying model.

The model of one persona of one user may also be compared or matched with models of personae of other users. This may be used for example in a social networking system, or dating system, in order to find users having personae sharing common interests or affinities. A persona of a specific user may also be compared to the personae of all users of a community - for example a virtual forum - and check if the interests of the user match the interests of the community.

The method of the invention may also be used by a customer relation management system for personalizing the service to a customer and/or for establishing statistics on customer interests. Another possible use of the method relates to social network services, for example in order to retrieve people sharing common interests.

In another application, the models of the invention may also be used for adapting an automatic dialog proposed by a dialog manager. Dialogue manager are used for example in automatic voice response systems and/or by websites for providing various services to users, and/or for retrieving information from those users. The questions, answers and/or offerings of the dialogue manager may thus be adapted, taking into account on one side the user's knowledge of the owner who operates the dialogue manager, and additionally the model of the persona. The aim here is to take into account the interests and level of experience of the user during the dialogue.

In another application, one user may also use the persona of another user and thus impersonate this other user when accessing some services. This may be used for example for finding a gift likely to please to the another user.

The model of a persona is typically based on hundredths of events and documents and is thus highly personal; it is very unlikely that two users will share exactly one same sufficiently trained model. A persona model may thus be used as a biometric tool defining precisely the interests of this persona, and used for authenticating or identifying the user. A user may for example access a remote web site without revealing its identity, but decide to send one model to get a personalized service. The remote server may recognize this model and - even without knowing the true identity of the user- adapt its service to the model received and to any other information the site may have about this user.

## Claims

1. A method for modelling a user, comprising:
- locally establishing more than one model (30, 31, 32) of the user, each model corresponding to one persona of this user,
- granting different access rights (300, 301, 302) to said models.

2. The method of claim 1, comprising transmitting at least one of said models to a remote application.

3. The method of one of the claims 1 or 2, wherein a hierarchy of said models is established, said hierarchy comprising models and sub-models included in the models.

4. The method of claim 3, wherein one model corresponds to one user at work, and more than one sub-models correspond to said user doing different kind of activities or having different interests at work.

5. The method of one of the claims 3 or 4, wherein said user changes said hierarchy and/or the list of models used.

6. The method of one of the claims 3 to 5, wherein said hierarchy and/or list of models used is automatically changed.

7. The method of claim 6, wherein a new event can trigger an automatic change in said hierarchy and/or in said list of models.

8. The method of one of the claims 1 to 7, wherein an additional model of a new persona of an existing user is automatically created.

9. The method of one of the claims 1 to 8, wherein different user-selected pseudonyms and/or icons are associated with different personae of a same user.

10. The method of one of the claims 1 to 9, wherein said models are adapted based on new events.

11. The method of one of the claims 7 to 10, wherein said events comprise events related to a user interaction with a text, fixed image, video sequence, audio information, multimedia information, e-mail and/or web-page, and/or events related to the selection of a document or link or object by said user, and/or events related to the notation or classification of a document or link or object by said user.

12. The method of one of the claims 1 to 11, wherein said models are changed based on at least one of the followings:
- explicit instructions or commands of said user, and/or
- continuous monitoring of the behaviour of said user, and/or
- monitoring of new events.

13. The method of one of the claims 1 to 12, wherein said access rights comprise rights to read and/or right to change and/or right to use said models.

14. The method of claim 13, wherein different rights are assigned to different parts of a single model.

15. The model of claim 14, wherein at least one model comprises a public part and a protected part.

16. The method of one of the claims 1 to 15, further comprising use of digital right management (DRM) technology for controlling the access rights to a model.

17. The method of claim 16, wherein said DRM technology is used for controlling at least one of the followings:
- the periods during which said model can be used, and/or
- the number of times said model can be used, and/or
- the applications which can access said model, and/or
- the devices which can access said model, and/or
- the users who can access said model.

18. The method of one of claims 1 to 17, wherein said user changes the right associated with one of his models.

19. The method of one of the claims 3 to 18, wherein said access rights depend on the level in said hierarchy of said model.

20. The method of one of the claims 1 to 19, wherein said model is adapted when a new event is received, and wherein the impact of said event in said model either:
- is a function of the time since receipt of the event, and/or
- depends on the number a time the same or a similar event has been received before.

21. The method of claim 20, said function being a decreasing function.

22. The method of one of the claims 20 to 21, wherein said function depends on the type of event and/or on the type of document associated with the event.

23. The method of one of the claims 1 to 22, wherein said model is established using a transductive support vector machine.

24. The method of one of the claims 1 to 23, wherein said model is established based on events and/or documents and/or user interactions from several applications (50, 51, 52) run locally.

25. The model of one of the claims 1 to 24, wherein each model is stored as a file.

26. The model of one of the claims 1 to 25, wherein each model comprises a compressed list of events, and/or a list of event objects.

27. The method of one of the claims 1 to 26, wherein said model is made available to more than one application or service.

28. The method of one of the claims 2 to 27, wherein said model is transmitted to a remote web server for personalising the data provided by said web server.

29. The method of one of the claims 2 to 28, wherein said model is transmitted without any user interaction to a remote server.

30. The method of one of the claims 2 to 28, wherein the transmission of said model is triggered by a user action.

31. The method of one of the claims 2 to 30, wherein said model is transmitted over a data channel during a voice call for personalising said voice call.

32. The model of one of the claims 2 to 31, wherein a link to said model is transmitted instead of said model.

33. The model of one of the claims 2 to 32, wherein the model transmitted is chosen either automatically or by said user among several models available.

34. The method of one of the claims 1 to 33, wherein the model which is adapted when a new event is received depends on at least one of the followings:
user selection among several models, and/or
the event itself, and/or
the time and/or location of the user, and/or
a previous log-in of the user.

35. The method of one of the claims 1 to 34, comprising a step of presenting to said user a user-personalized sorted list of events, links or documents based on said model.

36. The method of one of the claims 1 to 35, comprising a step of pulling user-dependant information based on said model, and/or filtering and/or ranking information based on said model.

37. The method of claim 36, comprising a first step of filtering information with a first filter independent of said model, and a second step of post-filtering and/or ranking the result delivered by said filter.

38. The method of one of the claims 1 to 37, comprising a step of merging several models of a same user or of different users.

39. The method of one of the claims 1 to 38, comprising a step of using another user's model to impersonate that user and/or to retrieve information that may interest or be relevant to that user.

40. The method of one of the claims 1 to 39, said model being used for at least one of the followings:
- authenticating or identifying said user with said model, and/or
- targeting advertisings presented to said user, and/or
- filtering spam, and/or
- a customer relation management system, and/or
- a social networking and/or dating application.

41. A computer data carrier comprising a program that may be executed by a computing device for carrying out the method of one of the claims 1 to 40 when said program is executed.

42. A phone storing a program that may be executed by said phone for carrying out the method of one of the claims 1 to 40 when said program is executed.
